# EUROPEAN PATENT APPLICATION

(11) **EP 4 751 916 A1**
(43) Date of publication of application: **03.06.2026**
(21) Application number: 24216973.8
(22) Date of filing: 02.12.2024
(51) Int. Cl.: B33Y 80/00, F28F 7/02

(54) **HEAT EXCHANGER AND METHOD FOR EXCHANGING HEAT**

(71) Applicant: Reverion GmbH, 86922 Eresing (DE)
(72) Inventor: HERRMANN, Stephan, 86922 Eresing (DE); OSTERMEIER, Peter, 86922 Eresing (DE)
(74) Representative: Grünecker Patent- und Rechtsanwälte PartG mbB

(57) **Abstract**

The invention relates to a heat exchanger for exchanging heat between three or more fluids, in particular for use in a fuel cell system or electrolysis system. The heat exchanger comprising: a housing with an internal separating structure forming three or more volumes that are separated from each other; wherein the three or more volumes are interwoven with each other in a primary region within the housing.

## Description

The present invention relates to a heat exchanger and a method for exchanging heat.

Exchanging heat between different media, especially between fluids, finds its application in many industrial applications, in particular processes that involve chemical reactions. The temperature of products and educts are modified which can increase the efficiency of chemical processes. Excess heat can be directly reused to provide the required temperatures for a process or a chemical reaction.

Heat exchangers are designed to achieve a heat transfer from one medium at higher temperature to another medium at lower temperature. Several parameters need to be taken into account to obtain an efficient heat exchange.

To be able to transfer heat, the two mediums need to be brought into contact to each other via a heat conducting separating structure having preferably a high surface area. Pressure losses of the fluids within the heat exchanger lead to reduced flow through the exchanger leading to reduced energy transfer. In addition, heat exchangers typically have to fit in a limited space and need to be sufficiently robust, to be compatible with the requirements of various reaction systems, for example fuel cell or electrolysis systems.

Stacked plate heat exchangers are known for allowing heat exchange amongst several fluid circuits. However, the stacked arrangement leads to a rather high volume to obtain sufficient heat transfer. Cascades of stacked heat exchangers are used to bring several fluids into thermal contact in different heat exchanger stacks connected in series. Such heat exchangers even require more space.

Therefore, it is an object of the present invention to provide an improved heat exchanger capable of exchanging heat between several fluids. It is a particular object to provide a heat exchanger with a higher heat transmission rate and/or a lower loss of pressure/flow rate compared to a known heat exchanger and/or using a reduced amount of material for a heat exchanger using the same or a similar volume.

The object of the invention is solved with a heat exchanger for exchanging heat between three or more fluids comprising a housing with an internal separating structure, forming three or more volumes that are separated from each other, wherein the three or more volumes are interwoven in a primary region within the housing. The interwoven arrangement of the volumes provides increased contact areas to improve the efficiency of the heat exchange while at the same time the outer dimensions can be smaller compared to known heat exchanger designs. Interwoven in this context relates to the distribution of the cross sections of the respective volumes in a given cross section of the primary region that is not constant but changes at least in some areas. The distribution of the cross sections may change throughout the primary region of the heat exchanger. The interwoven volumes are only separated by a wall of the separating structure.

In an exemplary embodiment, at least one of the volumes can be an inner volume that is disposed at least partly, in particular totally, within one of the other volumes in the primary region. This leads to the formation of a shell structure, which increases the surface area where heat transfer occurs between the inner and outer volumes.

In an exemplary embodiment of the primary region, the cross section of the inner volume can be surrounded, in particular entirely surrounded, by the cross section of the outer volume, in which the inner volume is disposed. With this configuration, the heat transfer between fluids flowing in the inner volume and the outer volume is increased due to the increased surface area. Moreover, the separation into an inner and outer volume can provide a protective function. Indeed, the fluid present in the inner volume can be separated from other fluids not only by the separating structure but also by the fluid in the outer volume. For example, highly reactive components, such as hydrogen and oxygen, can be separated this way.

In an exemplary embodiment, the internal separating structure can form four volumes that are separated from each other and a first volume and a second volume can at least partly be arranged within a fourth and third volume respectively. In a further exemplary embodiment, the first volume can be entirely surrounded by the fourth volume, and the second volume can be entirely surrounded by the third volume. A reliable heat transfer between four fluids can be achieved in a compact installation space with acceptable pressure and/or flow rate losses. This design furthermore protects the inner volumes from each other not only via the separating structure but also by the outer volumes. In addition, the heat transfer can efficiently occur between inner and outer volumes.

In an exemplary embodiment, the primary region of the separating structure can be designed such that the three or more volumes are all in direct contact to one another at least in a portion of the primary region, wherein volumes that are in direct contact to one another are separated only by a wall of the separating structure. This enables uniform heat transfer among all three or more fluids in a compact design with low pressure and/or flow rate losses.

In an exemplary embodiment, the heat exchanger can further comprise one fluid inlet and one fluid outlet for each volume such that the at least three volumes are separated from each other from the fluid inlet to the fluid outlet. This allows keeping the fluids separated from their entry until their discharge.

In an exemplary embodiment, the housing can comprise one or more secondary regions with only a proper subset of the three or more volumes, in particular wherein the volumes of the proper subset are interwoven with each other in the one or more secondary regions. In an exemplary embodiment, each one of the one or more secondary regions can be arranged downstream of the respective inlet and upstream of the primary region or downstream of the primary region and upstream of the respective outlet. This allows the transition to the inlets and outlets while reducing pressure and/or flow rate losses in the areas close to the inlets and outlets.

In an exemplary embodiment, the cross section of the inner volume can be reduced to zero in a transition region between the primary region and the secondary region to close the inner volume or the cross section of the inner volume can be extended until engagement with the outer volume's separating structure in the transition region between the primary region and the secondary region to thereby close the outer volume. According to a variant, the closing or extending of the inner volume can take place gradually, to decrease the pressure drop. This reduces the number of interwoven volumes as they approach the inlets and outlets.

In an exemplary embodiment, the inner volume can be lead outside of the outer volume in the transition between the primary region and the secondary region, in particular such that the inner volume and the outer volume are interwoven with each other in the secondary region, wherein further in particular, the remaining of the at least three volumes that is/are interwoven with the outer volume in the primary region is/are closed in the transition region between the primary and the secondary region. This reduces the number of interwoven volumes as they approach the inlets and outlets.

In an exemplary embodiment, a second transition region is provided between an inlet and/or outlet and a secondary region, where the one volume of the secondary region gradually decreases from the intersection with the secondary region towards the other boundary surface of the second transition region, in particular such that at the other boundary surface only one volume remains.

In an exemplary embodiment, the inlets and outlets can be positioned at a first surface and at a second surface of the housing that are opposing each other, and the surface area cross sections of at least one of the three or more volumes can change between the two opposing surfaces. The surface area cross sections of at least one of the three or more volumes can, in particular, increase from the first surface to the second surface, more in particular monotonically increase from the first surface to the second surface. The increase of the cross-sections of the volumes can be oriented in a direction where the temperature of at least one of the fluids rises. By expanding the cross-section, it becomes possible to compensate for the fluid's volume change due to its temperature increase. This approach helps reducing the pressure loss of the heated fluid.

In an exemplary embodiment, the rate of increase of the surface area of the cross section of the volumes can differ between at least two of the volumes, in particular as a function of the temperature. This allows individually adapting the cross sections of the volumes to the type of fluid and allows for lower pressure loss, as the cross sections can be adapted to the change of density following the change of temperature of the fluids when passing through the heat exchanger.

In an exemplary embodiment, two inlets and two outlets can be respectively positioned at a first surface and a second surface of the housing that are opposing each other, wherein a first and second secondary region can be arranged at the first surface and a third and fourth secondary region can be arranged at the second surface respectively, and each of the secondary regions can be connected to an inlet and an outlet at the respective surface. This way, fluids can flow in opposite directions through the heat exchanger, thereby improving the heat transmission rate.

In an exemplary embodiment, the first secondary region and the fourth secondary region can comprise the same two volumes and the second secondary region and the third secondary region can comprise the two other volumes. In a further exemplary embodiment, the first and fourth secondary region and the second and third secondary region are arranged such that a line between the first and fourth secondary regions crosses a line between the second and third region. In this design, the path length allowing the heat transmission from one warmer fluid to another colder fluid can be increased.

In an exemplary embodiment, the separating structure can comprise a plurality, in particular at least 10, more in particular at least 50, unit cells. This simplifies the design and manufacturing.

According to a further exemplary embodiment, the unit cells can all be identical to one another, at least in parts of the heat exchanger, preferably throughout the primary region. This simplifies the design and the manufacturing process.

In an exemplary embodiment, the heat exchanger can comprise different types of unit cells, each type having a different size and/or shape. For instance, unit cells can be stretched or compressed in one, two or three dimensions.

According to an exemplary embodiment, one or more unit cells at the periphery of the internal separating structure have a bent shape corresponding to the bent shape of the housing and/or one or more unit cells are cut in a bent manner to obtain the bent shape of the housing. The bent structure allows the heat exchanger to be adapted to a given curved volume. The bent cells could be arranged in one part of the heat exchanger and combined with straight unit cells in other parts of the heat exchanger.

Unit cells can have a cuboidal shape in Cartesian coordinates or a cylindrical base structure. This way, in particular in the transition between the primary and secondary regions can be adapted depending on the fluid flow parameters.

In an exemplary embodiment, the thickness of the separating structure between a first pair of volumes can differ from the thickness of the separating structure between a second pair of volumes. This way, the heat transfer can be individually adjusted depending on the neighboring fluids. Moreover, mechanical stability can be improved and chemical safety can be increased due to increased impermeability between volumes.

In an exemplary embodiment, the thickness of the separating structure between the inner volume and the outer volume can be larger than the thickness of the separating structure between the outer volume and the volume interwoven with the outer volume. This increases the heat transfer between interwoven volume. Moreover, the outer volume acts as a protective area. Furthermore, safety can be increased due to increased impermeability. The object of the invention is also achieved by a use of a heat exchanger as described in a fuel cell system or an electrolysis system. The higher heat transmission rate together with the lower pressure losses and installation space requirements of the heat exchanger according to the invention, increase the overall efficiency of those systems.

The object is also achieved by the fuel cell system and/or electrolysis system comprising the heat exchanger as described above and a fuel cell and/or a electrolysis reactor, and in particular a reformer or pre-reformer. The higher heat transmission rate together with the lower pressure losses and installation space requirements of the heat exchanger according to the invention, increase the overall efficiency of the fuel cell system.

The object of the present disclosure is also achieved by a method for exchanging heat between fluids with a heat exchanger, wherein the heat exchanger is provided with four fluids such that the fluids in directly neighbouring volumes of the primary regions and/or secondary regions are respectively moving in opposite directions. Due to the flow of the fluids in opposite directions, the heat transmission rate can be further increased without increasing the pressure loss.

The object of the present disclosure is also solved by the method for exchanging heat between fluids with a heat exchanger. Wherein the heat exchanger is provided with three or more fluids and the fluids provided in the inner volume and the volume that is interwoven with the outer volume are chemically reactive with each other. Moreover, the fluid provided in the outer volume is less chemically active compared to the two other fluids. This arrangement can increase the lifetime of the heat exchanger and therefore the process reliability. Lower wall thicknesses between the volumes are therefore possible, as the design-related reliability is higher. This way, the heat transmission rate can be increased.

The object of the present disclosure is also solved by the method for manufacturing of a heat exchanger according to the invention as described above. The method comprises a step of manufacturing the separating structure using additive manufacturing. In particular using of powder bed fusion by selective laser melting.

With the additive manufacturing process, the interwoven structure of the heat exchanger according to the invention can be produced more accurately and efficiently and can be adapted to changing requirements.

The invention will be better understood and other advantages will become apparent from the following non-limiting description and from the attached figures, which include:
Figure 1 illustrates schematically a cut view of a heat exchanger according to a first embodiment.
Figure 2 illustrates schematically a cross section in a xy plane, through a heat exchanger according to a second embodiment.
Figures 3a and 3b illustrate unit cells suitable for use with the heat exchanger according to the first or second embodiment.
Figure 4 illustrates an alternative unit cell for use with the heat exchanger according to the first or second embodiment.
Figures 5a and 5b illustrates schematically the principle of transition in transition regions from four to two volumes and the transition regions from two to one volume.
Figures 6a and 6b illustrates schematically the principle of transition in transition regions from four to the two other volumes compared to Figure 5a and the transition regions from two to one volume.
Figure 7a illustrates schematically a part of a heat exchanger according to a third embodiment.
Figure 7b schematically illustrates the transition from four to two volumes in the third embodiment.

The invention will be described in more detail using advantageous embodiments, by way of example and with reference to the drawings. The embodiments described are merely possible configurations so that individual features as described may be provided independently of one another or may be omitted when implementing the present invention.

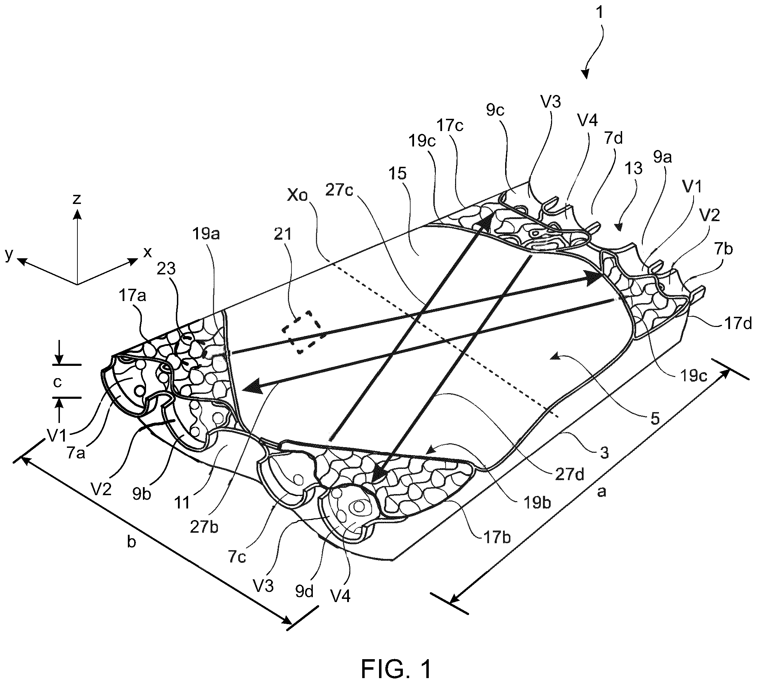

Figure 1 illustrates a schematic three dimensional cut view of a heat exchanger 1 according to a first embodiment of the invention.

The heat exchanger 1 comprises a housing 3 with an internal separating structure 5 forming four separated volumes v1-v4. Fluids, e.g. gaseous and/or liquid fluids, can flow through these volumes v1-v4 to exchange heat in the presence of temperature differences between the fluids. The separating structure 5 provides a separation of the volumes v1 to v4 that extends throughout the heat exchanger 1 such that the fluids do not mix with each other.

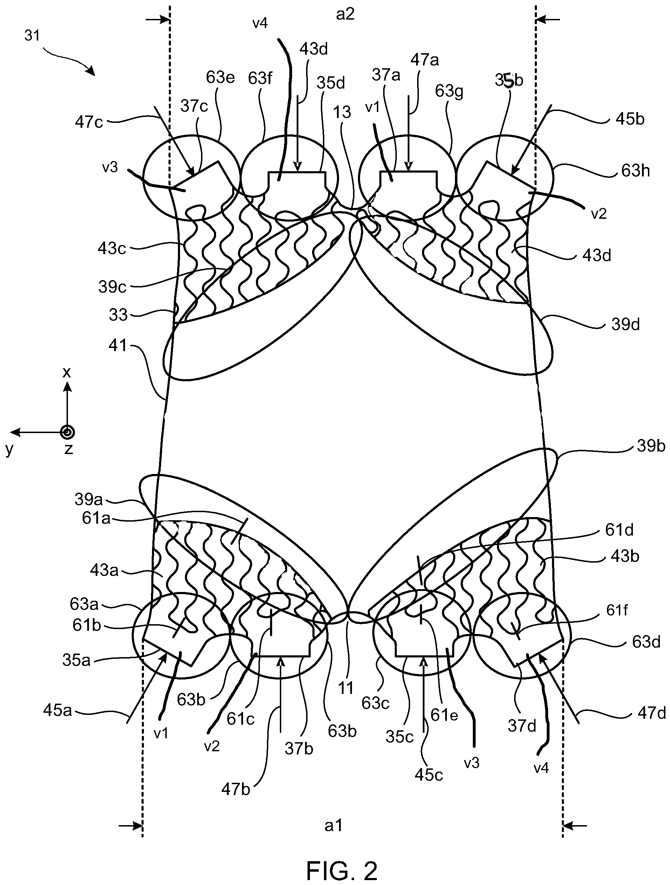

In this embodiment, the housing 3 has an essentially cuboidal shape with length a, width b and height c. The housing 3 can also have other shapes, like a curved shape or a tapered shape, like illustrated in Figure 2.

The heat exchanger 1 furthermore comprises four inlets 7a to 7d and four outlets 9a to 9d for introducing and discharging fluids.

Volume v1 is in fluid connection with the inlet 7a and the outlet 9a. Volume v2 is in fluid connection with the inlet 7b and the outlet 9b. Volume v3 is in fluid connection with the inlet 7c and the outlet 9c. Volume v4 is in fluid connection with the inlet 7d and the outlet 9d.

The heat exchanger 1 illustrated in Figure 1 comprises four separated volumes v1-v4. According to variants of the first embodiment of the invention, the heat exchanger 1 can also comprise only three separated volumes or more than four separated volumes and a corresponding number of inlets and outlets.

The inlets 7a to 7d and the outlets 9a to 9d may be positioned at opposing wide side surfaces 11 and 13 of the housing 3. In this embodiment, the inlets 7a and 7c, as well as the outlets 9b and 9d are arranged on the wide side surface 11. The inlets 7b and 7d, as well as the outlets 9a and 9c are arranged on the opposite wide side surface 13.

In this embodiment, all inlets 7a, 7c and outlets 9b, 9d on the wide side surface 11 are arranged along one line in one plane. Furthermore, the inlets 7a, 7c alternate with the outlets 9b, 9d. The inlets 7b, 7d and outlets 9a, 9c on the opposing wide surface side 13 are arranged the same way.

Instead of alternating the inlets and outlets, the two outlets may sandwich the pair of inlets on the one or both sides 11, 13 or vice versa, the inlets could sandwich the pair of outlets.

According to a variant, inlets and outlets on one side of the housing 3 could be arranged under an angle with respect to each other, like schematically illustrated in Figure 2. The inlets and outlets may also be arranged in a staggered way with respect to each other. This could simplify access to the inlets and outlets.

According to an alternative arrangement, the inlets and outlets may be positioned in pairs, one pair above the other. E.g., inlet 7c and outlet 9d arranged above inlet 7a and outlet 9b on the wide side surface 11 and outlet 9a and inlet 7b arranged above outlet 9c and inlet 7d on the other wide side surface 13.

According to a further variant, the inlets could all be arranged on the one side 11, whereas the outlets may all be arranged on the other side 13.

According to the invention, the separated volumes v1-v4 are interwoven. In particular, the distribution of the cross sections of the respective volumes v1-v4 is not constant, e.g. in x direction, but changes throughout the extension of heat exchanger 1, while the interwoven volumes v1-v4 are only separated by the wall of the separating structure 5.

In the heat exchanger 1, all four separated volumes v1-v4 can be interwoven in a primary region 15. The primary region 15 may make up the largest part of the heat exchanger's volume.

The primary region 15 may further be designed such that its cross section in the yz plane remains constant over a certain extent in the x dimension in particular around a central position x0.

Secondary regions 17a to 17d are formed between the inlets 7a-7d and the outlets 9a-9d on the wide side surface 11 and the opposing wide side surface 13 and the primary region 15. The secondary regions 17a - 17d may comprise a true subset of the number of separated volumes in the primary region 15.

In the present embodiment, the primary region 15 comprises the four separated volumes v1-v4. The secondary regions 17a and 17d only comprise the two separated volumes v1 and v2. The secondary regions 17b and 17c only comprise the two separated volumes v3 and v4. According to variants, other pairs of volumes could be present in the secondary regions, like v1 and v3 in one type of secondary regions and v2 and v4 in the other type secondary regions or v1 and v4 in one type of secondary regions and v2 and v3 in the other type of secondary regions.

The secondary regions 17a and 17b may be formed such that their cross sections perpendicular to the x dimension increase from transition regions 19a and 19b with the primary region 15 towards the wide side surface 11 at the same time as the cross sections of the primary region 15 decreases. The secondary regions 17c and 17d may be formed such that their cross sections perpendicular to the x dimension increase from transition regions 19c and 19d with the primary region 15 towards the opposing wide side surface 13.

In this embodiment, the transition from the primary region 15 towards the secondary regions 17a - 17d is arc shaped in the x-y plane. Seen from the primary region 15, the arc has a convexe shape. According to variants, other shapes, e.g. a concave shape, see the variant of Figure 2, or a straight or a triangular transition region, could be applied.

The separating structure 5 of the primary region 15 can be build up by a plurality of identical unit cells 21, e.g. of cubic shape, all having the same geometry and presenting the four volumes v1 to v4. The same applies to the separating structure of the secondary regions 17a to 17d, which can also be built up by a plurality of identical unit cells 23, each forming the volumes v1 and v2 in the secondary regions 17a and 17d as well as the volumes v3 and v4 in the secondary regions 17b and 17c.

In use, two fluids may flow in opposite direction to the two other fluids as illustrated by the arrows 27a to 27d. In addition, the flows in this embodiment are directed diagonally through the housing 3 to increase the flow path to improve the heat exchange. The heat exchanger can also be used with other flow paths and other arrangements of inlets and outlets.

Figure 2 illustrates a schematic two dimensional cross section view in the xy plane of a heat exchanger 31 according to a second embodiment of the invention.

The heat exchanger 31 of the second embodiment and the second heat exchanger 1 of the first embodiment are similar but have three structural differences. First, the tapered outer shape of the housing 33. Second, the angular arrangement of the inlets 35a-35d and the outlets 37a - 37d. Third, concave shaped transition regions 39a to 39d between the primary region 41 and the secondary regions 43a to 43d, when looking from the primary region 41. The other features of the heat exchanger 31 are the same as for the first heat exchanger and will therefore not be repeated again, reference is made to the description of Figure 1.

The housing 33 has a width a1 at the wide surface side 11 that is larger than the width a2 at the opposing wide side 13. By widening up the housing towards one side, one can take into account the change in density of the fluids due to the temperature change when passing through the heat exchanger 31. Typically, the higher the temperature of a fluid, the lower its density. The heat exchanger 31 can be used such that, the temperature of the fluids on the larger side 11 is higher than the temperature of the fluids one the thinner side 13 of the housing.

The axis 45a of the inlet 35a is arranged under an acute angle different from zero with respect to the axis 47b of the outlet 37b. The axis 45c of the inlet 35c is arranged under an acute angle different from zero with respect to the axis 47d of the outlet 37d. The axis 47b of the outlet 37b is parallel to the axis 45c of the inlet 35c and perpendicular to the wide side surface 11. Thus, the inlet and outlet towards the edge of the wide side 11 with the long sides of the housing are turned with respect to the surface normal. This can simplify the connections for the supply and discharge of the respective fluids.

The third difference with respect to the first embodiment is a different shape of the transition regions 39a to 39d. In this embodiment they are also arc-shaped but concavely curved when looking from the primary region 41.

According to variants of the first and second embodiments, the housing 3 of the heat exchanger 1 or 31 can have a bent structure to adapt to a given available volume in the final device in which the heat exchanger is used. To adapt the separating structure 5 to such a bent structure, one or more unit cells 21 and/or 23 positioned at the periphery of the internal separating structure 5 can have a bent shape that corresponds to the bent shape of the housing 3. As an alternative or in addition, one or more unit cells 21 and/or 23 are cut in a bent manner to obtain the bent shape of the housing. The bent cells could be arranged in one part of the heat exchanger and combined with straight unit cells in other parts of the heat exchanger.

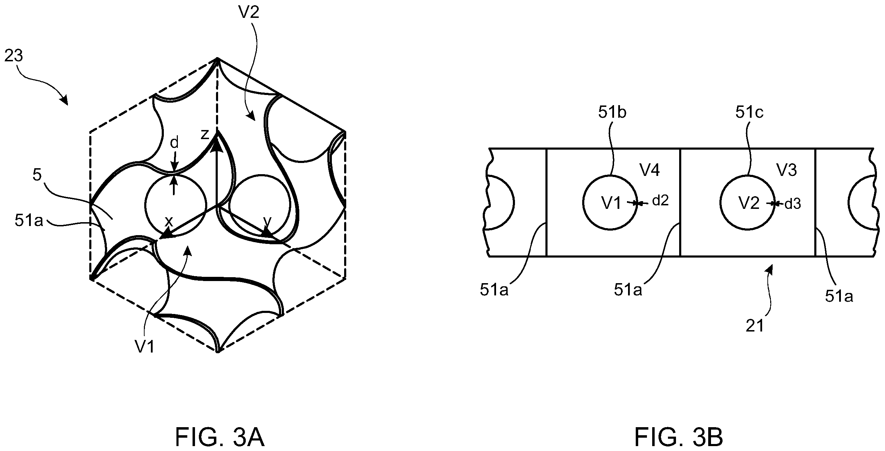

Figure 3a illustrates a unit cell 23 and Figure 3b illustrates schematically a unit cell 21, which can be used in the heat exchanger 1, 31 of the first and second embodiment. Features with reference numerals already used in Figures 1 and 2 are not described again, but reference will be made to their description above.

The wall 51a of the separating structure 5 of the unit cell 23 illustrated in Figure 3a is separating the volume of the unit cell into two volumes v1 and v2. The unit cell 23 has a cubic shape and the view illustrated in Figure 3a is onto one corner of the cube. The shape of the separating structure 5 in this embodiment has a minimal surface structure, here in the form of a gyroid. A gyroid structure is a triply periodic minimal surface structure (TPMS). The separating structure 5 thus essentially satisfies the equation sin(x)cos(y)+sin(y)cos(z)+sin(z)cos(x)=0. A wall thickness d has been attributed to the TPMS surface. This structure provides interwoven volumes v1 and v2.

Figure 3b illustrates the concept of providing a third v3 and fourth volume v4 for a unit cell 21 as used in the primary region.

The separating structure 5 in the unit cell 21 comprises the same wall 51a as in the unit cell 23 as illustrated in Figure 3a. The unit cell 21 and the unit cell 23 can have the same shape and size and differ only in the internal structure.

The separating structure 5 in the unit cell 21 further comprises two additional walls 51b and 51c. The wall 51b separates a further volume v4 from the volume v1 and the wall 51c separates a further volume v3 from the volume v2. Volume v4 with v1 as well as v3 with v2 form a shell like structure.

A wall thickness d2 and d3 has been attributed to the walls 51b and 51c respectively. The wall thicknesses d2 and d3 can be the same or different with respect to each other and with respect to the thickness d of the wall 51a. In one alternative the thicknesses d2 and d3 between the inner and outer volumes may be larger than the thickness d. The shape of the volumes v1 and v2 can be the same or can be different depending on the properties of the fluids.

The position of the walls 51b and 51c can be chosen such that the cross sections between the volumes v1 and v4 respectively v2 and v3 are optimized to the parameters of the heat exchanger, for example to take into account the volumetric flows of the fluids. In case the volumetric flow of fluid 1 is larger than the one of fluid 4, the available volume for fluid 1 should be larger than the one of fluid 4.

The shape and/or surface size of the walls 51b and 51c can be the same or can be different to each other, especially in case the fluids of one pair of volumes, e.g. v1/v4 needs to exchange more heat than the fluids in the other pair of volumes, e.g. v2/v3.

In this embodiment, the walls 51b and 51c are arranged such that they are not contacting the wall 51a in the primary region. Thus, the volume v1 is totally surrounded by volume v4 and the volume v2 is totally surrounded by volume v3. In addition, volumes v1 and v2 are centered within the volumes v4 and v3 respectively.

According to alternative embodiments of the primary region, one or both of the volumes v1 and v2 may be arranged such that they are no longer in the center of volume v4 and/or v3 respectively but shifted towards one side within the volume v4 and/or v3 respectively. According to one further embodiment, one or both of the volumes v1 and v2 can be arranged such that the wall 51b and/or 51c comes into contact with wall 51a at least at one point in the unit cell. In this case, volume v2 will be separated from volume v4 only via the separating structure 5 at least for the areas of contact. The same applies for volume v1 and v3.

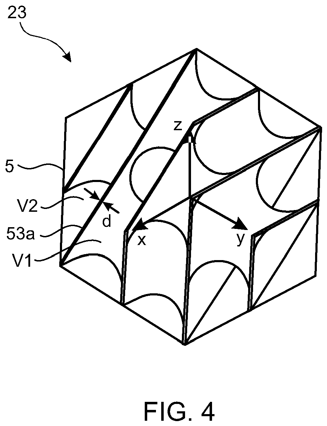

Figure 4 illustrates a variant of a unit cell 23. Features with reference numerals already used in Figures 1 to 3b are not described again, but reference will be made to their description above.

The wall 53a of the separating structure 5 of the unit cell 23 illustrated in Figure 4 is separating the volume of the unit cell into two volumes v1 and v2. The unit cell 23 has a cubic shape and the view illustrated in Figure 4 is onto one corner of the cube. The shape of the wall 53a of the separating structure 5 is also a minimal surface structure, but of the diamond form, also called Schwarz D, which is also a triply periodic minimal surface structure. This separating structure can be approximated by cos(x)cos(y)cos(z) - sin(x)sin(y)sin(z) = 0. A thickness d can be attributed to each point of the two dimensional shape of the surface.

The separating structure 5 of the unit cell 21 can be provided like illustrated in Figure 3b. Instead of using wall 51a as the separating structure between volumes v4 and v3, the wall 53a can be used. The walls 51b and 51c can then be adjusted to the shape of wall 53a.

By using triply periodic minimal surface structures, like the above-described Gyroid or Diamond type structure in Figures 3a and 4a, a higher stability can be achieved in the separated volumes even with thin wall structures. Other possible surface structures can be Schwarz-P, Lidinoid or I-WP.

Due to the inherent mechanical stability of triply periodic minimal surface structure, walls with reduced thickness compared to other geometries can be used which can increase the heat exchange rate and make the heat exchanger more efficient or smaller at same efficiency.

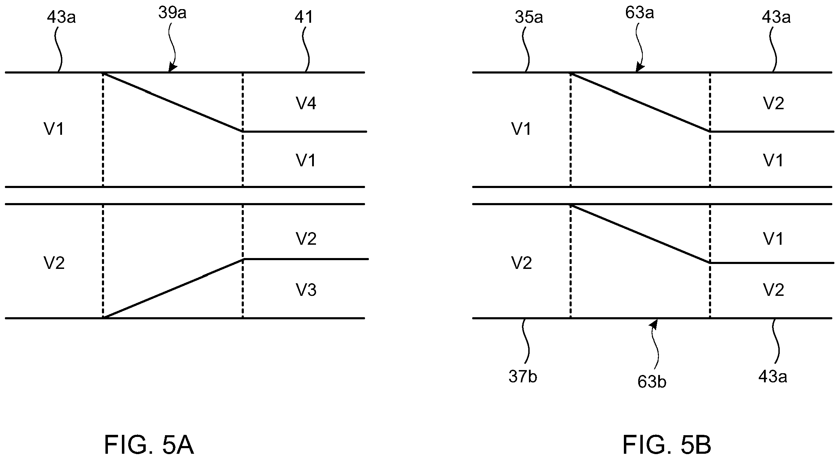

Figure 5a illustrates schematically the principle of transition along the cut line 61a between the secondary region 43a and the primary region 41 via the transition region 39a. In this area of the heat exchanger 31, the outer volumes v3 and v4 are gradually closed coming from the primary region 41 so that only the inner volumes v1 and v2 remain in the secondary region 43a. The same closing of volumes v3 and v4 occurs in the corresponding transition region 39d.

Figure 5b illustrates schematically the principle of transition along the cut lines 61b and 61c in the secondary transition regions 63a and 63b from two volumes v1 and v2 to areas with only one volume v1 or v2 towards the inlet 35a and the outlet 37b.

In the secondary transition region 63a, the volume v2 is gradually closed coming from the secondary region 43a towards the inlet 35a so that only volume v1 remains near the inlet 35a.

In the secondary transition region 63b, the volume v1 is gradually closed coming from the secondary region 43a towards the outlet 37b so that only volume v2 remains near the outlet 37b.

The same closing of volumes v2 and v1 occurs in the corresponding secondary transition regions 63g and 63h respectively towards the outlet 37a and the inlet 35b.

In the transition regions a blending using a continuous ramping function for c = f(x,y,z) is applied to the TPMS structure satisfying sin(x)cos(y)+sin(y)cos(z)+sin(z)cos(x)=c as illustrated in Figure 3a. For c ≠ 0, one volume becomes larger than the other does.

In the case of the gyroid structure as illustrated in Figure 3a, the transition can thus be realized by gradually changing the TPMS structure satisfying sin(x)cos(y)+sin(y)cos(z)+sin(z)cos(x)=c with the value of c gradually changing from c = 0 until a value c ≠ 0 for which one of the two volumes collapses, typically for c equals a quarter of the extension of one side of the cube. Depending on the sign of c, the one or the other volume collapses.

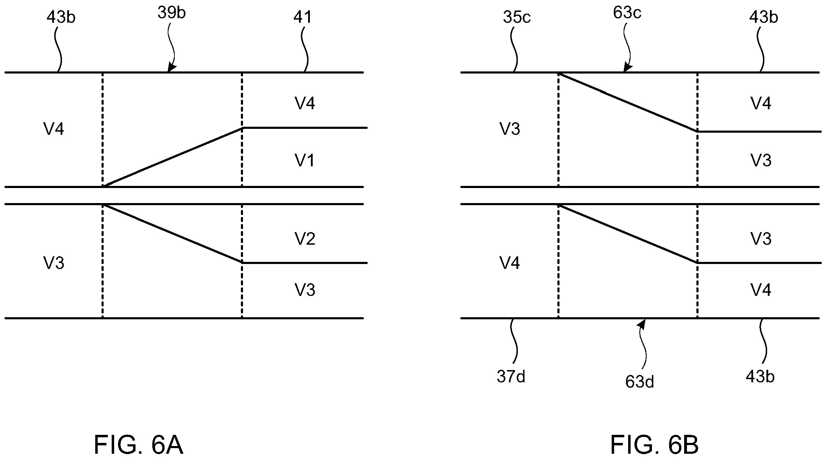

Figure 6a illustrates schematically the principle of transition along the cut line 61d between the secondary region 43b and the primary region 41 via the transition region 39b. In this area of the heat exchanger 31, the volumes v1 and v2 are gradually closed coming from the primary region 41 so that only volumes v3 and v4 remain in the secondary region 43b. The same closing of volumes v1 and v2 occurs in the corresponding transition region 39c.

Figure 6b illustrates schematically the principle of transition along the cut lines 61e and 61f in the regions of transitions 63c and 63d from two volumes v3 and v4 to areas with only one volume v3 or v4 towards the inlet 35c and the outlet 37d.

In the secondary transition region 63c, the volume v4 is gradually closed coming from the secondary region 43b towards the inlet 35c so that only volume v3 remains near the inlet 35c.

In the secondary transition region 63d, the volume v3 is gradually closed coming from the secondary region 43b towards the outlet 37d so that only volume v4 remains near the outlet 37d.

The same closing of volumes v4 and v3 occurs in the corresponding secondary transition regions 63e and 63f respectively towards the outlet 37c and the inlet 35d.

According to variants, other types of closing of volumes in transitions regions can be realized. Instead of pairing volumes v1 and v2 in the secondary regions 43a and 43d, and v3 and v4 in the secondary regions 43b and 43c, it is possible to combine volumes v1 with v3 and v2 with v4 respectively by closing the corresponding other volume v2 and v1 respectively.

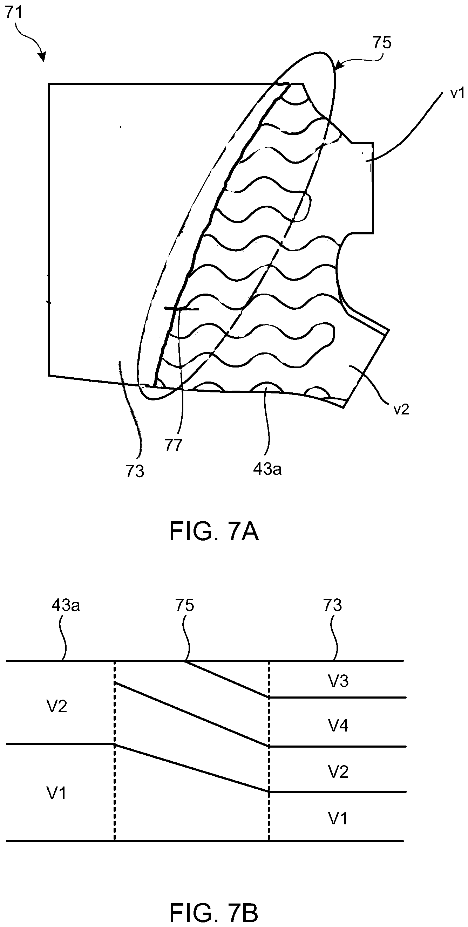

Figure 7a illustrates an alternative transition principle and illustrates a partial view of a heat exchanger 71 according to a third embodiment. This heat exchanger 71 has a similar design compared to the heat exchanger 31 of the first embodiment.

In this embodiment, the only difference is the distribution of the volumes v1 to v4 in the primary region 73, which is different compared to the distribution of the volumes in the second embodiment. Consequently, also the transition region 75 towards the secondary regions, here only region 43a is illustrated, is differently arranged. All other features are the same as in the second embodiment and reference is made to the description of the second embodiment above.

In this embodiment, volume v1 is arranged inside the volume v2 and volume v3 arranged inside volume v4. In the transition region 75 the volumes v3 and v4 are closed gradually towards the secondary region 43a.

Figure 7b illustrates schematically the principle of transition along the cut line 77 between the secondary region 43a and the primary region 73 via the transition region 77. In this area of the heat exchanger 71, the volumes v3 and v4 are gradually closed coming from the primary region 73. Thus, only volumes v1 and v2 remain in the secondary region 43a.

In this embodiment, first the inner volume v3 is gradually closed before the outer volume v4 is closed. According to an alternative, the closing of volumes can be realized the opposite way by first gradually closing volume v4 and then volume v3. At the same time, volumes v1 and v2 can gradually open up to fill the space of the corresponding unit cell. In the areas where only v1 and v2 remain, the unit cells can again have a gyroid shape or a diamond shape as illustrated in Figures 3a and 4a.

According to a variant, the inner volume v1 could also be guided outside the volume v2.

The same closing of volumes v3 and v4 occurs in the corresponding transition region 43d on the opposite side of the heat exchanger. Concerning the transition regions 43b and 43c, the principle is the same but adapted to the volumes v3 and v4 by closing volumes v1 and v2 in the transition regions.

Finally, the transition from two fluids to one fluid can be obtained the same way as illustrated in Figures 5b and 6b.

The transition regions in which volumes are closed and/or volumes are lead out of other volumes, may comprise adapted unit cells that are not uniform and can be different from the unit cells of the primary region. For example, the unit cells could smoothly change their shape to connect the different areas.

Again, the overall cross sections of the volumes can change from the inlet to the outlet to take into account change of density of the fluid while it heats up or cools down when passing through the heat exchanger.

The inventive heat exchangers 1, 31, 71 as illustrated in figures 1 to 7 can be used in the following way. Four fluids, in particular four different fluids, can be used with the inventive heat exchangers 1, 31, 71. Heat exchangers like described with respect to Figures 1 to 7 can be advantageously used in fuel cell systems and/or electrolysis systems comprising a fuel cell and/or electrolysis reactor and in particular a reformer or a pre-reformer.

For instance, hot fuel could be introduced into inlet 35a on the wide side surface 11, thus on the larger side of the heat exchanger with width a1, and discharged at lower temperature via outlet 37a on the opposite wide side surface 13, with the smaller width a2. In the opposite flow direction cold fuel could be introduced into inlet 35b on the wide side surface 13 and discharged at higher temperature via outlet 37b on the wide side surface 11. A flow of hot air could be introduced into inlet 35c on the wide side surface 11 and discharged at lower temperature via outlet 37c on the opposite wide side surface 13. In the opposite flow direction, cold air could be introduced into inlet 35d on the wide side surface 13 and discharged at higher temperature via outlet 37d on the wide side surface 11.

The four fluids exchange heat while flowing smoothly, in particular in reverse flow with respect to each other, through the separating structure 5 in the primary region 41. The interwoven arrangement of the volumes leads to an efficient heat exchange with low pressure drop. By adapting the closing of volumes in the transition regions 39a to 39d, dead ends in the pathway of the volumes can be reduced or even excluded. At the same time, the fluids are guided to their respective outlets.

In the embodiments in which a volume is positioned within another volume, fluids with chemical reactivity with respect to each other, can be separated by at least two wall structures and one or two intermediate volumes with a chemically inert fluid. This way, the use of the volume can be optimized for heat exchange and chemical stability thereby preventing corrosion, which could otherwise lead to leaks within the heat exchanger.

According to the invention, the separating structure 5 can be manufactured using an additive manufacturing process. One suitable manufacturing method is the so-called powder bed fusion, e.g. by selective laser melting. Using this manufacturing technology, the separating structure 5 is manufactured by applying a building material, e.g. a metallic powder, layer by layer and by solidifying the building material by supplying radiant energy to positions in each layer that are assigned to the cross-section of the separating structure in that layer. This allows the building up of the inventive interwoven separating structure 5. Support structures linking the walls 51a to 51c may provide in the primary region to provide mechanical stability, if needed.

The material may in particular be a stainless steel or Inconel. Other materials can find their application depending on the parameters of the heat exchanger.

Stainless steel based materials provide high heat transmission and at the same time a chemical stability against chemically reactive fluids and can be accurately processed to achieve a slender, yet mechanically stable, interwoven structure with an increased heat transfer surface via the separating structure 5.

### Reference numbers

- 1: heat exchanger first embodiment
- 3: housing
- 5: separating structure
- 7a-7d: inlets
- 9a-9d: outlets
- 11: wide side surface
- 13: opposing wide side surface
- 15: primary region
- 17a-17d: secondary regions
- 19a-19d: transition regions
- 21: unit cell in primary region
- 23: unit cell in secondary region
- 27a-27d: flow directions
- 31: heat exchanger second embodiment
- 33: housing
- 35a-35d: inlets
- 37a-37d: outlets
- 39a-39d: transition regions
- 41: primary region
- 43a-43d: secondary regions.
- 45a-45d: axes of the inlets
- 47a-47d: axes of the outlets
- 51a, 51b, 51c: walls in separating structure
- 53a: wall in variant of separating structure
- 61a-61f: cut lines in transition regions
- 63a-63h: transition regions from two to one volume
- 71: heat exchanger third embodiment
- 73: primary region
- 75: transition region
- 77: cut line in transition region
- 81: generating 3D dataset
- 83: converting Dataset in plurality of layers.
- 85: adding transition region
- 87: adding secondary region
- v1-v4: volumes
- x, y, z: cartesian coordinates
- a, b, c: length, width and height of housing
- d, d2, d3: wall thickness

## Claims

1. A heat exchanger for exchanging heat between three or more fluids comprising:
a housing (3) with an internal separating structure (5), forming three or more volumes (v1-v4) that are separated from each other;
wherein the three or more volumes (v1-v4) are interwoven in a primary region (15, 41, 73) within the housing (3).

2. The heat exchanger of claim 1, wherein at least one of the volumes (v1, v2) is an inner volume that is disposed at least partly or totally within one of the other volumes (v4, v3) in the primary region.

3. The heat exchanger of claim 2, wherein, in the primary region the cross section of the inner volume (v1, v2) is surrounded, in particular entirely surrounded, by the cross section of the volume (v4, v3), that the inner volume is disposed in.

4. The heat exchanger according to claim 2 or 3, wherein the internal separating structure forms four volumes in the primary region that are separated from each other and a first volume (v1) and a second volume are at least partly arranged within a fourth volume (v4) and third volume (v3) respectively, in particular the first volume is entirely surrounded by the fourth volume (v4) and the second volume (v2) is entirely surrounded by the third volume (v3).

5. The heat exchanger according to claim 1 or 2, wherein in the primary region (15, 41, 73) the separating structure (5) is such that the three or more volumes are all in direct contact to one another at least in a portion of the primary region (15, 41, 73), wherein volumes that are in direct contact to one another are separated only by a wall of the separating structure.

6. The heat exchanger according to one of claims 1 to 5, further comprising one fluid inlet (7a - 7d, 35a - 35d) and one fluid outlet (9a - 9d, 37a -37d) for each volume such that the at least three volumes are separated from each other from the fluid inlet (7a - 7d, 35a - 35d) to the fluid outlet (9a - 9d, 37a -37d).

7. The heat exchanger according to one of claims 1 to 6, wherein the housing comprises one or more secondary regions (43a-43d) with only a proper subset of the three or more volumes, in particular wherein the volumes of the proper subset are interwoven with each other in the one or more secondary regions (43a-43d).

8. The heat exchanger according to claim 7, wherein each one of the one or more secondary regions (43a-43d) is arranged downstream of a respective inlet (7a - 7d, 35a -35d) and upstream of the primary region (15, 41, 73) or downstream of the primary region (15, 41, 73) and upstream of a respective outlet (9a - 9d, 37a -37d).

9. The heat exchanger according to one of claims 7 or 8 in combination with claim 3, wherein the cross section of the inner volume reduces to zero in a transition region between the primary region (15, 41, 73) and the secondary region (43a-43d) to close the inner volume or the cross section of the inner volume extends until engagement with the outer volume's separating structure (5) in the transition region between the primary region (15, 41, 73) and the secondary region (43a-43d) to thereby close the outer volume.

10. The heat exchanger according to one of claims 7 or 8 in combination with claim 3, wherein the inner volume is lead outside of the outer volume in the transition region between the primary region (15, 41, 73) and the secondary region (43a-43d), in particular such that the inner volume and the outer volume are interwoven with each other in the secondary region (43a-43d), wherein in more particular, the remaining of the at least three volumes that is/are interwoven with the outer volume and inner volume in the primary region (15, 41, 73) is/are closed in the transition region between the primary and the secondary region (43a-43d).

11. The heat exchanger according to one of claims 6 to 10, wherein the inlets (7a - 7d, 35a - 35d) and outlets (9a - 9d, 37a -37d) are positioned at a first surface (11) and at a second surface (13) of the housing (3) that are opposing each other, and
the surface area cross sections of at least one of the three or more volumes changes between the two opposing surfaces, in particular increase from the first surface to the second surface, more in particular monotonically increase from the first surface to the second surface.

12. The heat exchanger according to claim 11, wherein the rate of increase of the surface area of the cross section of the volumes differs between at least two of the volumes.

13. The heat exchanger according to one of claims 1 to 12, wherein the separating structure comprises a plurality of, in particular at least 10, more in particular at least 50, unit cells (21, 23), wherein the unit cells (21) are preferably all identical in the primary region (15, 41) and/or the secondary regions (17a -17d, 43a - 43d).

14. The heat exchanger according to one of claims 1 to 13, wherein the thickness of the separating structure (5) between a first pair of volumes differs from the thickness of the separating structure (5) between a second pair of volumes, in particular wherein the thickness of the separating structure (5) between the inner volume and the outer volume is larger than the thickness of the separating structure (5) between the outer volume and the volume interwoven with the outer volume.

15. Use of a heat exchanger according to one of claims 1 to 14 in a fuel cell system or an electrolysis system.

16. Method for exchanging heat between fluids with a heat exchanger according to one of claims 1 to 14 in combination with claim 7, wherein the heat exchanger is provided with four fluids such that the fluids in directly neighboring volumes of the primary region and/or secondary regions are respectively moving in opposite directions.

17. Method for exchanging heat between fluids with a heat exchanger according to one of claims 1 to 14 in combination with claim 3, wherein the heat exchanger is provided with three or more fluids and the fluids provided in the inner volume and the volume that is interwoven with the outer volume are chemically reactive with each other and the fluid provided in the outer volume is less chemically active compared to the other fluids.

18. Method for manufacturing of a heat exchanger according to one of claims 1 to 14 comprising a step of manufacturing the separating structure using additive manufacturing in particular using powder bed fusion by selective laser melting.
